# EUROPEAN PATENT SPECIFICATION

(11) **EP 3 375 615 B1**
(45) Date of publication and mention of the grant of the patent: **29.09.2021**
(21) Application number: 16863459.0
(22) Date of filing: 24.08.2016
(51) Int. Cl.: B41J 2/175, G06F 12/14, G06F 21/44, G06F 21/78, H04L 29/06

(54) **PRINTER CHIP, INK CARTRIDGE, AND METHOD OF ALLOCATING DATA STORAGE TO PRINTER CHIP**
DRUCKERCHIP, TINTENPATRONE UND VERFAHREN ZUR ZUTEILUNG EINES DATENSPEICHERS ZU EINEM DRUCKERCHIP
PUCE D'IMPRIMANTE, CARTOUCHE D'ENCRE, ET PROCÉDÉ D'AFFECTATION DE MÉMOIRE DE DONNÉES À UNE PUCE D'IMPRIMANTE

(30) Priority: 09.11.2015 CN 201510754337
(43) Date of publication of application: 19.09.2018
(73) Proprietor: Hangzhou Chipjet Technology Co., Ltd., Hangzhou, Zhejiang 310012 (CN)
(72) Inventor: ZHANG, Zhengdong, Zhejiang 310012 (CN); SUN, Yun, Zhejiang 310012 (CN); PENG, Xinping, Zhejiang 310012 (CN)
(74) Representative: Sarpi, Maurizio
(86) International application number: PCT/CN2016/096488
(87) International publication number: WO 2017/080281

(56) References cited:
- EP-A1- 1 272 935
- CN-A- 102 231 054
- CN-A- 102 555 552
- CN-A- 102 831 352
- CN-A- 105 346 256
- CN-U- 202 517 844
- JP-A- 2015 085 510
- US-A1- 2007 211 291
- US-B2- 9 104 140

## Description

### Field of Technology

The invention relates to the field of ink-jet printing, in particular to a printer chip, an ink cartridge and a printer chip storage allocation method.

### Background Art

With the popularization of office automation, printing equipment has become indispensable equipment for office activities, common printing equipment includes laser printing equipment and ink-jet printing equipment, and during ink-jet printing, an ink-jet printer and an ink cartridge mounted in the printer are included.

In the using process of the ink-jet printer, consumables such as the ink cartridge need to be replaced periodically. The ink cartridge needs to be replaced when ink in the ink cartridge is used up, the replaceable equipment such as the ink cartridge includes printing parameters, the printing parameters are generally stored in a chip, the printer chip is mounted in the replaceable equipment such as the ink cartridge so that a printer main body can obtain the data in the first time every time the replaceable equipment is replaced, and thus a good printing effect is guaranteed.

In the prior art, for guaranteeing the stability and incorrigibility of information, the information is generally written into the printer chip once, which means that the chip can only be used once and cannot be used repeatedly, and thus the use value of the chip is decreased.
US9104140 discloses systems, methods and apparatuses relating to prevention of unauthorized cartridges or unauthorized refill or authorized cartridges. The technical problem to be solved by US9104140 is substantially as follows: since a key is stored in the chip, the attacker will obtain the key by probing the integrated circuit, thus affecting the security of the chip.

### Summary of the Invention

The invention is set out in the appended claims. According to the purposes of the invention, by additionally arranging an authorization flag bit and conducting authorization verification matched with the authorization flag bit, on the basis of guaranteeing the stability and reliability of data, chip data can be covered, reread and rewritten, normal use is ensured, and the service life of a printer chip is prolonged.

The above technical purposes of the invention are realized through the following technical scheme: a printer chip comprises a chip control circuit, a data storage unit used for storing data, and a communication unit used for communication with a printer, wherein the data storage unit and the communication unit are electrically connected with the chip control circuit respectively; the printer chip is characterized in that:
the data storage unit comprises an authorization flag bit which makes the data storage unit in a non-authorized state and an authorized state respectively according to different numerical values;
in the non-authorized state, the data storage unit comprises a non-protected part allowing data to be read or written therein by the control circuit, and a protected part allowing data to be read by the control circuit but not allowing data to be written therein by the control circuit, and a disposable part allowing data to be read by the control circuit and only allowing disposable data to be written therein by the control circuit;
in the authorized state, the data storage unit comprises the non-protected part;
the control circuit comprises a key unit, an operation unit and a reading and writing unit;
the operation unit is used for operating input data sent from a printer main body through key data stored in the key unit so as to obtain a first check code;
the operation unit is also used for comparing a second check code sent from the printer main body with the first check code and changing the numerical value of the authorization flag bit in the data storage unit.

The printer chip is mounted on a replaceable component, the replaceable component is not authorized specifically in an ordinary service state, namely data on the authorization flag bit make the data storage unit in the non-authorized state, the data storage unit is divided into a plurality of areas at the moment and at least comprises the non-protected part, the protected part and the disposable part, and the three parts are different on the aspect of reading and writing permissions; the non-protected part allows data to be read and written therein by printing equipment such as the printer main body and is a common data operation port, data stored in the protected part are input when used for the first time, can only be read and cannot be modified or written in, for example, when the printer chip is mounted on an ink cartridge, data stored in the protected part can be the first service date of the ink cartridge, the data can only be read and cannot be modified once being written in, and a user can speculate the effective service life of the ink cartridge according to the first service date of the ink cartridge; the disposable part allows data to be written therein, however, writing can be conducted on each data bit only once, for example, it is stipulated that the binary system is adopted for data storage of the disposable part, data can be written from 0 to 1, but once data are written as 1, the data cannot be written as 0 anymore, and thus extremely high applicability is achieved during actual application, for example, data in the disposable part include multiple bits, each bit corresponds to part ink of the ink cartridge, the data are written as 1 from 0 when the part of ink is used up, and the user can work out residual ink quantity data according to data of the part, and besides, the user can also write the ink cartridge protector series number and other information into the disposable part; the user can divide the data storage unit into N data blocks, each data block corresponds to an address, the data blocks and the addresses correspond to different permissions, and thus a corresponding table of the data blocks, the addresses and the permissions is formed; when the control circuit needs to carry out corresponding operation on the data storage unit, addressing can be carried out on the data storage unit through the set table, so that the corresponding permission and the corresponding address are found out for reading and writing operation; according to one provided embodiment, the permission 0 indicates read only and corresponds to the protected part, the permission 1 indicates that writing is available and corresponds to the non-protected part, and the permission 3 indicates that bits can only be changed from 0 to 1 and corresponds to the disposable part; in addition, the permission 2 indicates the rule that only data larger than original data can be written and can be used for recording the number of printing times in actual operation, the number of printing times is increased gradually and cannot be decreased in the using process of the printer, and the user can estimate information such as the residual ink quantity according to the recorded number of printing times; when the replaceable component needs to be replaced at the end of the life, verification for special authorization needs to be performed and comprises the specific steps that the printer main body sends an instruction, and the printer chip can feed back random data, the operation unit conducts calculation according to the instruction, the random data and the key data stored in the key unit, so that a first check code is obtained; similarly, the printer main body obtains a second check code through calculation according to the instruction and the random data, and afterwards, the second check code is sent to the printer chip; the operation unit compares the first check code with the second check code; if the first check code is different from the second check code, special authorization fails; if the first check code is the same as the second check codes, special authorization succeeds, the authorization flag bit is changed at the moment, the state of the whole data storage unit is changed accordingly, and the whole data storage unit is converted into the non-protected part, namely new data can be input to the data storage unit; in this way, the printer chip can be used repeatedly, and the service life of the printer chip is prolonged.

Preferably, when the data storage unit is in the non-authorized state, the disposable part includes the ink cartridge maximum volume data.

Preferably, when the data storage unit is in the non-authorized state, the disposable part further includes ink cartridge protector serial number data and protection start bit data.

Preferably, when the data storage unit is in the non-authorized state, the protected part includes the ink cartridge first service date.

Preferably, the operation unit carries out operation through data sent from the printer main body and the key data stored in the key unit according to the AES algorithm or the DES algorithm or the EDES algorithm or the 3DES algorithm.

It has already been proved that by adoption of the internationally-standard AES algorithm or the internationally-standard DES algorithm or the internationally-standard EDES algorithm or the internationally-standard 3DES algorithm, copying and imitation are unavailable under the safe key condition, and safety of the calculation and authentication processes for special authorization is guaranteed.

An ink cartridge is provided with the printer chip described above.

A printing head is provided with the printer chip.

A printer comprises the printing head and the ink cartridge, wherein the printing head is provided with the printer chip, and the ink cartridge is provided with the printer chip.

A printer chip storage allocation method is performed through a printer main body comprising a main body operation unit and replaceable equipment provided with the printer chip and comprises the following steps of:
firstly, sending an authorization request:
   specifically, the printer main body sends out an authorization request command to the printer chip;
secondly, returning random data:
   specifically, random data are generated by the printer chip and sent to the printer main body through the communication unit;
thirdly, generating check codes:
   specifically, the printer chip carries out encryption operation through key data stored in the key unit by using the random data as input, so that a first check code is obtained, and the main body operation unit in the printer main body obtains a second check code through the same operation method;
fourthly, comparing the check codes:
   specifically, the printer main body sends the second check code to the printer chip, and the printer chip compares the first check code with the second check code;
fifthly, marking an authorization sign:
   specifically, when the first check code is consistent with the second check code in the fourth step, the authorization sign is marked to be valid, and the data storage unit is switched into the authorized state, and if the first check code is inconsistent with the second check code, the data storage unit is still in the non-authorized state.

In the first step, the printer main body sends out the authorization request command to the printer chip, for example, 0x60 0x00 0x98 is sent, wherein 0x60 represents the chip address of the printer chip, and 0x00 0x98 represents the authorization request command; after the printer chip receives the authorization request command, the second step is executed, specifically, and an authorization random number is returned, for example, 0x00 0x08 0x65 0x97 0x35 0x63 0x34 0x23 0x56 0x39 is returned, wherein 0x00 0x08 indicates the data length, and 0x65 0x97 0x35 0x63 0x34 0x23 0x56 0x39 represents the 8-bit random data; the third step is executed at the moment, specifically, the printer chip carries out encryption operation through the key data stored in the key unit by using the random data as input, so that the first check code is obtained, and the main body operation unit in the printer main body obtains the second check code through the same operation method; the fourth steps is executed, specifically, the printer main body sends the second check code to the printer chip, for example, the data 0x60 0x00 0x78 0x24 0x35 0x69 0x23 0x74 0x13 0x86 0x89 0x24 0x35 0x69 0x23 0x74 0x13 0x86 0x89 are sent, wherein 0x60 still represents the data address, 0x00 0x78 represents an authorization matching command, the subsequent 0x24 0x35 0x69 0x23 0x74 0x13 0x86 0x89 0x24 0x35 0x69 0x23 0x74 0x13 0x86 0x89 represents the second check code, and the printer chip compares the second check code with the first check code worked out by the printer chip; the fifth step is executed after matching comparison, if the data are inconsistent, the authorization flag bit is not changed, namely special authorization fails; if the data are consistent, the authorization flag bit is changed, special authorization succeeds, and the non-protected part, the protected part and the disposable part originally in the data storage unit are all converted into non-protected parts.

Preferably, in the third step, the encryption operation method adopted by the printer main body and the printer chip is the AES algorithm or the DES algorithm or the EDES algorithm or the 3DES algorithm.

Preferably, in the first step, the authorization request command sent by the printer main body further includes chip address data of the printer chip.

Preferably, in the third step, the input data for the encryption operation method further include fixed data fixed as 00 besides the random data.

Preferably, the replaceable equipment is an ink cartridge.

In conclusion, the invention has the following beneficial effects that:
the permission of the data storage unit can be rewritten and converted into a non-protected part, comprehensive re-inputting of data is achieved, and the service life of the printer chip is prolonged;
the AES or the DES algorithm or the EDES algorithm or the 3DES algorithm is adopted for specific authorization and authentication, and thus the safety is high;
input information for specific authorization and authentication uses the command sent from the printer main body and the random data generated by the printer chip as input, the original stored key data are used, so that the authentication calculating process is rigorous, and data safety is highly maintained.

### Brief Description of Drawings

FIG. 1 is a schematic diagram of a first embodiment;
FIG. 2 is a schematic diagram of a data storage unit in a non-authorized state in the first embodiment;

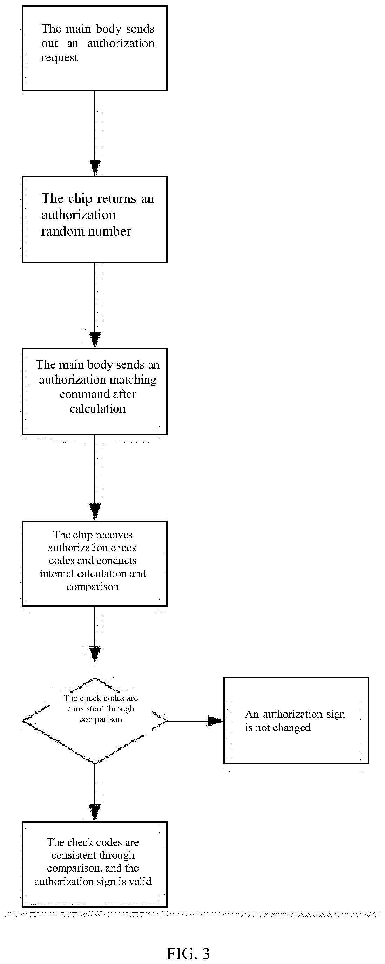

FIG. 3 is a data block diagram of the steps from the first step to the fifth step in the first embodiment.

### Detailed Description of the Invention

A further detailed description of the invention is given as follows with accompanying drawings.

The specific embodiment is only used for explaining the invention, but not used for limiting the invention, those skilled in the field can obtain non-creative modifications of the embodiment of the invention according to requirements after reading the description, and all the modifications in the scope of the claims of the invention are protected by the patent law.

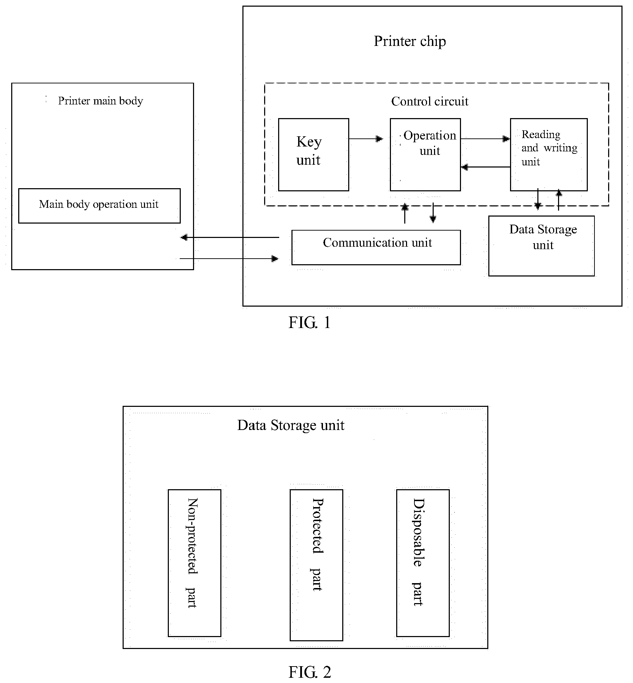

First embodiment, as is shown in FIGs. 1-2, a printer chip comprises a chip control circuit, a data storage unit used for storing data, and a communication unit used for communication with a printer, wherein the data storage unit and the communication unit are electrically connected with the chip control circuit respectively; the printer chip is characterized in that:
the data storage unit comprises an authorization flag bit which makes the data storage unit in a non-authorized state and an authorized state respectively according to different numerical values;
in the non-authorized state, the data storage unit comprises a non-protected part allowing data to be read or written therein by the control circuit, and a protected part allowing data to be read by the control circuit but not allowing data to be written therein by the control circuit, and a disposable part allowing data to be read by the control circuit and only allowing disposable data to be written therein by the control circuit;
in the authorized state, the data storage unit comprises the non-protected part;
the control circuit comprises a key unit, an operation unit and a reading and writing unit;
the operation unit is used for operating input data sent from a printer main body through key data stored in the key unit so as to obtain a first check code;
the operation unit is also used for comparing a second check code sent from the printer main body with the first check code and changing the numerical value of the authorization flag bit in the data storage unit.

The printer chip is mounted on a replaceable component, the replaceable component is not authorized specifically in an ordinary service state, namely data on the authorization flag bit make the data storage unit in the non-authorized state, the data storage unit is divided into a plurality of areas at the moment and at least comprises the non-protected part, the protected part and the disposable part, and the three parts are different on the aspect of reading and writing permissions; the non-protected part allows data to be read and written therein by printing equipment such as the printer main body and is a common data operation port, data stored in the protected part are input when used for the first time, can only be read and cannot be modified or written in, for example, when the printer chip is mounted on an ink cartridge, data stored in the protected part can be the first service date of the ink cartridge, the data can only be read and cannot be modified once being written in, and a user can speculate the effective service life of the ink cartridge according to the first service date of the ink cartridge; the disposable part allows data to be written therein, however, writing can be conducted on each data bit only once, for example, it is stipulated that the binary system is adopted for data storage of the disposable part, data can be written from 0 to 1, but once data are written as 1, the data cannot be written as 0 anymore, and thus extremely high applicability is achieved during actual application, for example, data in the disposable part include multiple bits, each bit corresponds to part ink of the ink cartridge, the data are written as 1 from 0 when the part of ink is used up, and the user can work out residual ink quantity data according to data of the part, and besides, the user can also write the ink cartridge protector series number and other information into the disposable part; the user can divide the data storage unit into N data blocks, each data block corresponds to an address, the data blocks and the addresses correspond to different permissions, and thus a corresponding table of the data blocks, the addresses and the permissions is formed; when the control circuit needs to carry out corresponding operation on the data storage unit, addressing can be carried out on the data storage unit through the set table, so that the corresponding permission and the corresponding address are found out for reading and writing operation; according to one provided embodiment, the permission 0 indicates read only and corresponds to the protected part, the permission 1 indicates that writing is available and corresponds to the non-protected part, and the permission 3 indicates that bits can only be changed from 0 to 1 and corresponds to the disposable part; in addition, the permission 2 indicates the rule that only data larger than original data can be written and can be used for recording the number of printing times in actual operation, the number of printing times is increased gradually and cannot be decreased in the using process of the printer, and the user can estimate information such as the residual ink quantity according to the recorded number of printing times; when the replaceable component needs to be replaced at the end of the life, verification for special authorization needs to be performed and comprises the specific steps that the printer main body sends an instruction, and the printer chip can feed back random data, the operation unit conducts calculation according to the instruction, the random data and the key data stored in the key unit, so that a first check code is obtained; similarly, the printer main body obtains a second check code through calculation according to the instruction and the random data, and afterwards, the second check code is sent to the printer chip; the operation unit compares the first check code with the second check code; if the first check code is different from the second check code, special authorization fails; if the first check code is the same as the second check codes, special authorization succeeds, the authorization flag bit is changed at the moment, the state of the whole data storage unit is changed accordingly, and the whole data storage unit is converted into the non-protected part, namely new data can be input to the data storage unit; in this way, the printer chip can be used repeatedly, and the service life of the printer chip is prolonged.

When the data storage unit is in the non-authorized state, the disposable part includes the ink cartridge maximum volume data, ink cartridge protector serial number data and protection start bit data.

When the data storage unit is in the non-authorized state, the protected part includes the ink cartridge first service date.

The operation unit carries out operation through data sent from the printer main body and the key data stored in the key unit according to the AES algorithm or the DES algorithm or the EDES algorithm or the 3DES algorithm. It has already been proved that by adoption of the AES algorithm or the DES algorithm or the EDES algorithm or the 3DES algorithm, copying and imitation are unavailable under the safe key condition, and safety of the calculation and authentication process for specific authorization is guaranteed.

A printer chip storage allocation method is performed through a printer main body comprising a main body operation unit and replaceable equipment provided with the printer chip and comprises the following steps of:
firstly, sending an authorization request:
   specifically, the printer main body sends out an authorization request command to the printer chip;
secondly, returning random data:
   specifically, random data are generated by the printer chip and sent to the printer main body through the communication unit;
thirdly, generating check codes:
   specifically, the printer chip carries out encryption operation through key data stored in the key unit by using the random data as input, so that a first check code is obtained, and the main body operation unit in the printer main body obtains a second check code through the same operation method;
fourthly, comparing the check codes:
   specifically, the printer main body sends the second check code to the printer chip, and the printer chip compares the first check code with the second check code;
fifthly, marking an authorization sign:
   specifically, when the first check code is consistent with the second check code in the fourth step, the authorization sign is marked to be valid, and the data storage unit is switched into the authorized state, and if the first check code is inconsistent with the second check code, the data storage unit is still in the non-authorized state.

In the first step, the printer main body sends out the authorization request command to the printer chip, for example, 0x60 0x00 0x98 is sent, wherein 0x60 represents the chip address of the printer chip, and 0x00 0x98 represents the authorization request command; after the printer chip receives the authorization request command, the second step is executed, specifically, and an authorization random number is returned, for example, 0x00 0x08 0x65 0x97 0x35 0x63 0x34 0x23 0x56 0x39 is returned, wherein 0x00 0x08 indicates the data length, and 0x65 0x97 0x35 0x63 0x34 0x23 0x56 0x39 represents the 8-bit random data; the third step is executed at the moment, specifically, the printer chip carries out encryption operation through the key data stored in the key unit by using the random data as input, so that the first check code is obtained, and the main body operation unit in the printer main body obtains the second check code through the same operation method; the fourth steps is executed, specifically, the printer main body sends the second check code to the printer chip, for example, the data 0x60 0x00 0x78 0x24 0x35 0x69 0x23 0x74 0x13 0x86 0x89 0x24 0x35 0x69 0x23 0x74 0x13 0x86 0x89 are sent, wherein 0x60 still represents the data address, 0x00 0x78 represents an authorization matching command, the subsequent 0x24 0x35 0x69 0x23 0x74 0x13 0x86 0x89 0x24 0x35 0x69 0x23 0x74 0x13 0x86 0x89 represents the second check code, and the printer chip compares the second check code with the first check code worked out by the printer chip; the fifth step is executed after matching comparison, if the data are inconsistent, the authorization flag bit is not changed, namely special authorization fails; if the data are consistent, the authorization flag bit is changed, special authorization succeeds, and the non-protected part, the protected part and the disposable part originally in the data storage unit are all converted into non-protected parts.

## Claims

1. A printer chip, comprising a chip control circuit, a data storage unit used for storing data, and a communication unit used for communication with a printer, wherein the data storage unit and the communication unit are electrically connected with the chip control circuit respectively; wherein:
the data storage unit comprises an authorization flag bit which causes the whole data storage unit to switch between an unauthorized state and an authorized state according to different numerical values of the authorization flag bit;
when the data storage unit is in the unauthorized state, the data storage unit comprises a non-protected part allowing data to be read or written therein by the control circuit, and a protected part allowing data to be read by the control circuit, and a disposable part allowing data to be read by the control circuit and only allowing disposable data to be written therein by the control circuit;
when the data storage unit is in the authorized state, the whole data storage unit is converted into the non-protected part;
the control circuit comprises a key unit, an operation unit and a reading and writing unit;
the operation unit is used for operating input data sent from a printer main body through key data stored in the key unit so as to obtain a first check code;
the operation unit is also used for comparing a second check code sent from the printer main body with the first check code and changing the numerical value of the authorization flag bit in the data storage unit; wherein, when the data storage unit is in an unauthorized state:
- data in the protected part are writable by the control circuit only when it is used for the first time, and cannot be modified once being written in,
- data in the disposable part are writeable by the control circuit on each data bit only once,
- the data are writeable in the disposable part from 0 to 1 and, once data are written as 1, the data cannot be written as 0 anymore,
- the data written in the disposable part include multiple bits, wherein each bit corresponds to part of the ink of the ink cartridge, and
- the data are written in the disposable part as 1 from 0 when the part of ink is used up, so that a user is enabled working out residual ink quantity data according to data of the part.

2. The printer chip according to Claim 1, **characterized in that** when the data storage unit is in the unauthorized state, the disposable part includes the ink cartridge maximum volume data.

3. The printer chip according to Claim 2, **characterized in that** when the data storage unit is in the unauthorized state, the disposable part further includes ink cartridge protector serial number data and protection start bit data.

4. The printer chip according to Claim 1, **characterized in that** when the data storage unit is in the unauthorized state, the protected part includes the ink cartridge first service date.

5. The printer chip according to any of Claims 1-4, **characterized in that** the operation unit carries out operation through data sent from the printer main body and the key data stored in the key unit according to the AES algorithm or the DES algorithm or the EDES algorithm or the 3DES algorithm.

6. An ink cartridge, **characterized in that** the ink cartridge is provided with the printer chip according to any of Claims 1-5.

7. A printer, comprising a printing head and an ink cartridge, **characterized in that** the ink cartridge is provided with the printer chip according to any of the Claims 1-5.

8. A printer chip storage allocation method, performed through a printer main body comprising a main body operation unit and replaceable equipment provided with the printer chip comprising a chip control circuit, a data storage unit for storing data and a communication unit, according to any of Claims 1-5; comprising the following steps of:
firstly, sending an authorization request:
the printer main body sends out an authorization request command to the printer chip;
secondly, returning random data:
random data are generated by the printer chip and sent to the printer main body through the communication unit;
thirdly, generating check codes:
the printer chip carries out encryption operation through key data stored in the key unit by using the random data as input, so that a first check code is obtained, and the main body operation unit in the printer main body obtains a second check code through the same operation method;
fourthly, comparing the check codes:
the printer main body sends the second check code to the printer chip, and the printer chip compares the first check code with the second check code;
fifthly, marking an authorization sign:
when the first check code is consistent with the second check code in the fourth step, the authorization sign is marked to be valid, and the whole data storage unit, which comprises an authorization flag bit, is switched into the authorized state, and if the first check code is inconsistent with the second check code, the data storage unit is still in the unauthorized state;
wherein:
when the data storage unit is in the unauthorized state, the data storage unit comprises a non-protected part allowing data to be read or written therein by the control circuit, and a protected part allowing data to be read by the control circuit, and a disposable part allowing data to be read by the control circuit and only allowing disposable data to be written therein by the control circuit;
when the data storage unit is in the authorized state, the whole data storage unit is converted into the non-protected part;
- data in the protected part are writeable by the control circuit only when it is used for the first time, and cannot be modified once being written in,
- data in the disposable part are writeable by the control circuit on each data bit only once;
- the data are writeable in the disposable part from 0 to 1 and, once data are written as 1, the data cannot be written as 0 anymore,
- the data written in the disposable part include multiple bits, wherein each bit corresponds to part of the ink of the ink cartridge, and
- the data are written in the disposable part as 1 from 0 when the part of ink is used up, so that a user is enabled working out residual ink quantity data according to data of the part.

9. The printer chip storage allocation method according to Claim 8, **characterized in that** in the third step, the encryption operation method adopted by the printer main body and the printer chip is the AES algorithm or the DES algorithm or the EDES algorithm or the 3DES algorithm.

10. The printer chip storage allocation method according to Claim 8, **characterized in that** in the first step, the authorization request command sent by the printer main body further includes chip address data of the printer chip.

11. The printer chip storage allocation method according to Claim 8, **characterized in that** in the third step, the input data for the encryption operation method further include fixed data fixed as 00 besides the random data.

12. The printer chip storage allocation method according to Claim 8, **characterized in that** the replaceable equipment is an ink cartridge.

## Patentansprüche

1. Druckerchip, umfassend einen Chipsteuerkreis, eine Datenspeichereinheit, die zum Speichern von Daten benutzt wird, und eine Kommunikationseinheit, die zur Kommunikation mit einem Drucker benutzt wird, wobei die Datenspeichereinheit und die Kommunikationseinheit jeweils elektrisch mit dem Chipsteuerkreis verbunden sind; wobei:
die Datenspeichereinheit ein Autorisierungsflagbit umfasst, das bewirkt, dass die gesamte Datenspeichereinheit gemäß verschiedenen numerischen Werten des Autorisierungsflagbits zwischen einem nicht autorisierten Zustand und einem autorisierten Zustand umschaltet;
die Datenspeichereinheit, wenn die Datenspeichereinheit im nicht autorisierten Zustand ist, einen nichtgeschützten Teil, der ermöglicht, dass Daten durch den Steuerkreis darin gelesen oder geschrieben werden, und einen geschützten Teil, der ermöglicht, dass Daten durch den Steuerkreis gelesen werden, und einen verfügbaren Teil umfasst, der ermöglicht, dass Daten durch den Steuerkreis gelesen werden, und ermöglicht, dass nur verfügbare Daten durch den Steuerkreis darin geschrieben werden;
die gesamte Datenspeichereinheit, wenn die Datenspeichereinheit im autorisierten Zustand ist, in den nichtgeschützten Teil umgewandelt wird;
der Steuerkreis eine Schlüsseleinheit, eine Betriebseinheit und eine Lese- und Schreibeinheit umfasst;
die Betriebseinheit zum Handhaben von Eingabedaten, die von einem Druckerhauptkörper gesendet werden, über Schlüsseldaten, die in der Schlüsseleinheit gespeichert sind, zum Erhalten eines ersten Prüfcodes benutzt wird;
die Betriebseinheit außerdem zum Vergleichen eines zweiten Prüfcodes, der vom Druckerhauptkörper gesendet wird, mit dem ersten Prüfcode und Ändern des numerischen Werts des Autorisierungsflagbits in der Datenspeichereinheit benutzt wird; wobei, wenn die Datenspeichereinheit in einem nicht autorisierten Zustand ist:
- Daten im geschützten Teil nur dann durch den Steuerkreis schreibbar sind, wenn sie zum ersten Mal benutzt werden, und nicht modifiziert werden können, sobald sie geschrieben sind,
- Daten im verfügbaren Teil nur einmal durch den Steuerkreis auf jedes Datenbit schreibbar sind,
- die Daten im verfügbaren Teil von 0 bis 1 schreibbar sind, und, sobald Daten als 1 geschrieben sind, die Daten nicht mehr als 0 geschrieben werden können,
- die Daten, die im verfügbaren Teil geschrieben sind, mehrfache Bits enthalten, wobei jedes Bit einem Teil der Tinte der Tintenpatrone entspricht, und
- die Daten im verfügbaren Teil von 0 als 1 geschrieben werden, wenn der Teil der Tinte aufgebraucht ist, sodass es einem Benutzer ermöglicht wird, Resttintenmengendaten gemäß Daten des Teils auszuarbeiten.

2. Druckerchip nach Anspruch 1, **dadurch gekennzeichnet, dass**, wenn die Datenspeichereinheit im nicht autorisierten Zustand ist, der verfügbare Teil die Tintenpatronen-Maximalvolumendaten enthält.

3. Druckerchip nach Anspruch 2, **dadurch gekennzeichnet, dass**, wenn die Datenspeichereinheit im nicht autorisierten Zustand ist, der verfügbare Teil ferner Tintenpatronen-Schutzseriennummerdaten und - schutzstartbitdaten enthält.

4. Druckerchip nach Anspruch 1, **dadurch gekennzeichnet, dass**, wenn die Datenspeichereinheit im nicht autorisierten Zustand ist, der geschützte Teil das erste Inbetriebnahmedatum der Tintenpatrone enthält.

5. Druckerchip nach einem der Ansprüche 1 bis 4, **dadurch gekennzeichnet, dass** die Betriebseinheit Betrieb über Daten, die vom Druckerhauptkörper gesendet werden, und die Schlüsseldaten, die in der Schlüsseleinheit gespeichert sind, gemäß dem AES-Algorithmus oder dem DES-Algorithmus oder dem EDES-Algorithmus oder dem 3DES-Algorithmus ausführt.

6. Tintenpatrone, **dadurch gekennzeichnet, dass** die Tintenpatrone mit dem Druckerchip nach einem der Ansprüche 1 bis 5 versehen ist.

7. Drucker, der einen Druckkopf und eine Tintenpatrone umfasst, **dadurch gekennzeichnet, dass** die Tintenpatrone mit dem Druckerchip nach einem der Ansprüche 1 bis 5 versehen ist.

8. Druckerchipspeicherzuteilungsverfahren, das über einen Druckerhauptkörper ausgeführt wird, welcher eine Hauptkörperbetriebseinheit und austauschbare Ausstattung umfasst, die mit dem Druckerchip, welcher einen Chipsteuerkreis, eine Datenspeichereinheit zum Speichern von Daten und eine Kommunikationseinheit umfasst, nach einem der Ansprüche 1 bis 5 versehen ist; umfassend die folgenden Schritte:
erstens, Senden einer Autorisierungsanforderung:
wobei der Druckerhauptkörper einen Autorisierungsanforderungsbefehl an den Druckerchip aussendet;
zweitens, Zurückführen von Zufallsdaten:
wobei Zufallsdaten durch den Druckerchip erstellt und über die Kommunikationseinheit an den Druckerhauptkörper gesendet werden;
drittens, Erstellen von Prüfcodes:
wobei der Druckerchip Verschlüsselungsbetrieb über Schlüsseldaten, die in der Schlüsseleinheit gespeichert sind, unter Benutzung der Zufallsdaten als Eingabe ausführt, sodass ein erster Prüfcode erhalten wird, und die Hauptkörperbetriebseinheit im Druckerhauptkörper einen zweiten Prüfcode über dasselbe Betriebsverfahren erhält;
viertens, Vergleichen der Prüfcodes:
wobei der Druckerhauptkörper den zweiten Prüfcode an den Druckerchip sendet und der Druckerchip den ersten Prüfcode mit dem zweiten Prüfcode vergleicht;
fünftens, Markieren eines Autorisierungszeichens:
wobei, wenn der erste Prüfcode im vierten Schritt mit dem zweiten Prüfcode konsistent ist, das Autorisierungszeichen als gültig markiert wird und die gesamte Datenspeichereinheit, die ein Autorisierungsflagbit umfasst, in den autorisierten Zustand umgeschaltet wird, und wobei, wenn der erste Prüfcode nicht mit dem zweiten Prüfcode konsistent ist, die Datenspeichereinheit immer noch im nicht autorisierten Zustand ist;
wobei:
wenn die Datenspeichereinheit im nicht autorisierten Zustand ist, die Datenspeichereinheit einen nichtgeschützten Teil, der ermöglicht, dass Daten durch den Steuerkreis darin gelesen oder geschrieben werden, und einen geschützten Teil, der ermöglicht, dass Daten durch den Steuerkreis gelesen werden, und einen verfügbaren Teil umfasst, der ermöglicht, dass Daten durch den Steuerkreis gelesen werden, und ermöglicht, dass nur verfügbare Daten durch den Steuerkreis darin geschrieben werden;
wenn die Datenspeichereinheit im autorisierten Zustand ist, die gesamte Datenspeichereinheit in den nichtgeschützten Teil umgewandelt wird;
- Daten im geschützten Teil nur dann durch den Steuerkreis schreibbar sind, wenn sie zum ersten Mal benutzt werden, und nicht modifiziert werden können, sobald sie geschrieben sind,
- Daten im verfügbaren Teil nur einmal durch den Steuerkreis auf jedes Datenbit schreibbar sind,
- die Daten im verfügbaren Teil von 0 bis 1 schreibbar sind, und, sobald Daten als 1 geschrieben sind, die Daten nicht mehr als 0 geschrieben werden können,
- die Daten, die im verfügbaren Teil geschrieben sind, mehrfache Bits enthalten, wobei jedes Bit einem Teil der Tinte der Tintenpatrone entspricht, und
- die Daten im verfügbaren Teil von 0 als 1 geschrieben werden, wenn der Teil der Tinte aufgebraucht ist, sodass es einem Benutzer ermöglicht wird, Resttintenmengendaten gemäß Daten des Teils auszuarbeiten.

9. Druckerchipspeicherzuteilungsverfahren nach Anspruch 8, **dadurch gekennzeichnet, dass** im dritten Schritt das Verschlüsselungsbetriebsverfahren, das durch den Druckerhauptkörper und den Druckerchip angewendet wird, der AES-Algorithmus oder der DES-Algorithmus oder der EDES-Algorithmus oder der 3DES-Algorithmus ist.

10. Druckerchipspeicherzuteilungsverfahren nach Anspruch 8, **dadurch gekennzeichnet, dass** im ersten Schritt der Autorisierungsanforderungsbefehl, der durch den Druckerhauptkörper gesendet wird, ferner Chipadressdaten des Druckerchips enthält.

11. Druckerchipspeicherzuteilungsverfahren nach Anspruch 8, **dadurch gekennzeichnet, dass** im dritten Schritt die Eingabedaten für das Verschlüsselungsbetriebsverfahren ferner Festdaten, die als 00 festgelegt sind, neben den Zufallsdaten enthalten.

12. Druckerchipspeicherzuteilungsverfahren nach Anspruch 8, **dadurch gekennzeichnet, dass** die austauschbare Ausstattung eine Tintenpatrone ist.

## Revendications

1. Puce d'imprimante, comprenant un circuit de commande de puce, une unité de stockage de données utilisée pour stocker des données, et une unité de communication utilisée pour la communication avec une imprimante, dans laquelle l'unité de stockage de données et l'unité de communication sont connectées électriquement au circuit de commande de puce respectivement ; dans laquelle :
l'unité de stockage de données comprend un bit indicateur d'autorisation qui amène toute l'unité de stockage de données à commuter entre un état non autorisé et un état autorisé en fonction de différentes valeurs numériques du bit indicateur d'autorisation ;
lorsque l'unité de stockage de données se trouve dans l'état non autorisé, l'unité de stockage de données comprend une partie non protégée permettant à des données d'être lues ou écrites dans celle-ci par le circuit de commande, et une partie protégée permettant à des données d'être lues par le circuit de commande, et une partie jetable permettant à des données d'être lues par le circuit de commande et permettant uniquement à des données jetables d'être écrites dans celle-ci par le circuit de commande ;
lorsque l'unité de stockage de données se trouve dans l'état autorisé, toute l'unité de stockage de données est convertie en partie non protégée ;
le circuit de commande comprend une unité clé, une unité opérationnelle et une unité de lecture et d'écriture ;
l'unité opérationnelle est utilisée pour manipuler des données d'entrée envoyées depuis un corps principal d'imprimante par l'intermédiaire des données clés stockées dans l'unité clé de manière à obtenir un premier code de vérification ;
l'unité opérationnelle est également utilisée pour comparer un second code de vérification envoyé depuis le corps principal d'imprimante avec le premier code de vérification et modifier la valeur numérique du bit indicateur d'autorisation dans l'unité de stockage de données ; dans laquelle, lorsque l'unité de stockage de données se trouve dans un état non autorisé :
- des données dans la partie protégée peuvent être écrites par le circuit de commande uniquement lorsqu'elle est utilisée pour la première fois, et ne peuvent être modifiées une fois écrites,
- des données dans la partie jetable ne peuvent être écrites par le circuit de commande sur chaque bit de données qu'une seule fois,
- les données peuvent être écrites dans la partie jetable de 0 à 1 et, une fois que les données sont écrites en tant que 1, les données ne peuvent plus être écrites en tant que 0,
- les données écrites dans la partie jetable incluent de multiples bits, dans laquelle chaque bit correspond à une partie de l'encre de la cartouche d'encre, et
- les données sont écrites dans la partie jetable en tant que 1 à partir de 0 lorsque la partie d'encre est épuisée, de sorte qu'un utilisateur puisse déduire des données de quantité d'encre résiduelle en fonction des données de la partie.

2. Puce d'imprimante selon la revendication 1, **caractérisée en ce que** lorsque l'unité de stockage de données se trouve dans l'état non autorisé, la partie jetable inclut les données de volume maximal de cartouche d'encre.

3. Puce d'imprimante selon la revendication 2, **caractérisée en ce que** lorsque l'unité de stockage de données se trouve dans l'état non autorisé, la partie jetable inclut en outre des données de numéro de série de protection de cartouche d'encre et des données binaires de début de protection.

4. Puce d'imprimante selon la revendication 1, **caractérisée en ce que** lorsque l'unité de stockage de données se trouve dans l'état non autorisé, la partie protégée inclut la date de première mise en service de cartouche d'encre.

5. Puce d'imprimante selon l'une quelconque des revendications 1 à 4, **caractérisée en ce que** l'unité opérationnelle met en œuvre une fonction par l'intermédiaire de données envoyées depuis le corps principal d'imprimante et les données clés stockées dans l'unité clé en fonction de l'algorithme AES ou de l'algorithme DES ou de l'algorithme EDES ou de l'algorithme 3DES.

6. Cartouche d'encre, **caractérisée en ce que** la cartouche d'encre est dotée de la puce d'imprimante selon l'une quelconque des revendications 1 à 5.

7. Imprimante, comprenant une tête d'impression et une cartouche d'encre, **caractérisée en ce que** la cartouche d'encre est dotée de la puce d'imprimante selon l'une quelconque des revendications 1 à 5.

8. Procédé d'affectation de stockage pour puce d'imprimante, réalisé par l'intermédiaire d'un corps principal d'imprimante comprenant une unité opérationnelle de corps principal et un équipement remplaçable doté de la puce d'imprimante comprenant un circuit de commande de puce, une unité de stockage de données pour stocker des données et une unité de communication, selon l'une quelconque des revendications 1 à 5 ; comprenant les étapes suivantes de :
premièrement, envoi d'une demande d'autorisation :
le corps principal d'imprimante envoie une commande de demande d'autorisation à la puce d'imprimante ;
deuxièmement, transmission de données aléatoires :
des données aléatoires sont générées par la puce d'imprimante et envoyées au corps principal d'imprimante par l'intermédiaire de l'unité de communication ;
troisièmement, génération de codes de vérification :
la puce d'imprimante met en œuvre une fonction de cryptage par l'intermédiaire de données clés stockées dans l'unité clé en utilisant les données aléatoires comme entrée, de sorte qu'un premier code de vérification soit obtenu, et l'unité opérationnelle de corps principal dans le corps principal d'imprimante obtient un second code de vérification par l'intermédiaire du même procédé opérationnel ;
quatrièmement, comparaison des codes de vérification :
le corps principal d'imprimante envoie le second code de vérification à la puce d'imprimante, et la puce d'imprimante compare le premier code de vérification avec le second code de vérification ;
cinquièmement, marquage d'un signe d'autorisation :
lorsque le premier code de vérification est compatible avec le second code de vérification dans la quatrième étape, le signe d'autorisation est marqué comme étant valide, et toute l'unité de stockage de données, qui comprend un bit indicateur d'autorisation, est commutée dans l'état autorisé, et si le premier code de vérification n'est pas compatible avec le second code de vérification, l'unité de stockage de données reste dans l'état non autorisé ;
dans lequel :
lorsque l'unité de stockage de données se trouve dans l'état non autorisé, l'unité de stockage de données comprend une partie non protégée permettant à des données d'être lues ou écrites dans celle-ci par le circuit de commande, et une partie protégée permettant à des données d'être lues par le circuit de commande, et une partie jetable permettant à des données d'être lues par le circuit de commande et permettant uniquement à des données jetables d'être écrites dans celle-ci par le circuit de commande ;
lorsque l'unité de stockage de données se trouve dans l'état autorisé, toute l'unité de stockage de données est convertie en partie non protégée ;
- des données dans la partie protégée peuvent être écrites par le circuit de commande uniquement lorsqu'elle est utilisée pour la première fois, et ne peuvent être modifiées une fois écrites,
- des données dans la partie jetable ne peuvent être écrites par le circuit de commande sur chaque bit de données qu'une seule fois,
- les données peuvent être écrites dans la partie jetable de 0 à 1 et, une fois que les données sont écrites en tant que 1, les données ne peuvent plus être écrites en tant que 0,
- les données écrites dans la partie jetable incluent de multiples bits, dans lequel chaque bit correspond à une partie de l'encre de la cartouche d'encre, et
- les données sont écrites dans la partie jetable en tant que 1 à partir de 0 lorsque la partie d'encre est épuisée, de sorte qu'un utilisateur puisse déduire des données de quantité d'encre résiduelle en fonction des données de la partie.

9. Procédé d'affectation de stockage pour puce d'imprimante selon la revendication 8, **caractérisé en ce que** dans la troisième étape, le procédé opérationnel de cryptage adopté par le corps principal d'imprimante et la puce d'imprimante est l'algorithme AES ou l'algorithme DES ou l'algorithme EDES ou l'algorithme 3DES.

10. Procédé d'affectation de stockage pour puce d'imprimante selon la revendication 8, **caractérisé en ce que** dans la première étape, la commande de demande d'autorisation envoyée par le corps principal d'imprimante inclut en outre des données d'adresses de puce de la puce d'imprimante.

11. Procédé d'affectation de stockage pour puce d'imprimante selon la revendication 8, **caractérisé en ce que** dans la troisième étape, les données d'entrée pour le procédé opérationnel de cryptage incluent en outre des données fixes fixées comme étant 00 outre les données aléatoires.

12. Procédé d'affectation de stockage pour puce d'imprimante selon la revendication 8, **caractérisé en ce que** l'équipement remplaçable est une cartouche d'encre.
